# EUROPEAN PATENT SPECIFICATION

(11) **EP 3 850 603 B1**
(45) Date of publication and mention of the grant of the patent: **20.05.2026**
(21) Application number: 19773311.6
(22) Date of filing: 10.09.2019
(51) Int. Cl.: G08G 1/01, B60C 23/00, B60W 30/095, G01C 21/34, B62D 15/02, B60W 40/06, G08G 1/0967, G08G 1/0968, B60W 30/10

(54) **INTELLIGENT VEHICULAR SYSTEM FOR REDUCING ROADWAY DEGRADATION**
INTELLIGENTES FAHRZEUGSYSTEM ZUR REDUZIERUNG DES STRASSENVERSCHLEISSES
SYSTÈME DE VÉHICULE INTELLIGENT POUR RÉDUIRE LA DÉGRADATION DE LA ROUTE

(30) Priority: 10.09.2018 US 201816126266
(43) Date of publication of application: 21.07.2021
(73) Proprietor: DISH NETWORK, L.L.C., Englewood, CO 80112 (US)
(72) Inventor: KENYON, Christopher, Michael, Cheyenne, Wyoming 82001 (US)
(74) Representative: Reddie & Grose LLP
(86) International application number: PCT/US2019/050318
(87) International publication number: WO 2020/055804

(56) References cited:
- WO-A1-2018/026603
- WO-A2-2010/042957
- DE-A1- 102006 061 425
- DE-A1- 102016 001 997
- SE-A1- 1 650 237
- US-A1- 2016 272 243

## Description

### TECHNICAL FIELD

The present disclosure is related to the field of intelligent vehicular systems. More particularly, the present disclosure is directed at a vehicular system that reduces roadway degradation causing a driving path of a first vehicle to be staggered with respect to the driving path of a second vehicle by applying different offset displacements to the original driving paths of the first vehicle and the second vehicle. The offset displacements applied by each vehicle can be calculated in real-time based on environmental variables and vehicular data collected from sensors associated with the first vehicle and the second vehicle. Application of different offset displacements by different vehicles allows greater usage of the roadway, thereby reducing roadway degradation from repetitive driving on the same areas of the roadway.

### BACKGROUND

The inefficiencies of the road transportation system have a significant impact on our lives. In some instances, efforts at cutting costs and optimizing resources by companies and individuals can result in freight trucks carrying heavier and heavier loads. The wear and tear caused by heavy trucks is worsening maintenance conditions. In many places, weighty 18-wheelers are regularly traveling at high speeds on roads that were never meant to carry them. To make matters worse, in many areas, state and federal jurisdictional authorities are sometimes unable to repair the road transportation system for several reasons such as lack of knowledge of worn-out road locations, reduced funding, unfavorable weather conditions, official policy, or otherwise any other reason. Thus, the conditions of the road transportation system either stays the same or continues to deteriorate. Poor roads can cost humans to be subjected to exorbitant car repair fees, unrealized safety improvements might result in hardship, injury and even death. Some high-end cars are equipped with sensors capable of spotting a vehicle in a driver's blind spot, or warning that the car is drifting out of a lane. However, these technologies generally do not address the issues arising due to a poor road transportation system. Thus, there is an increased need for systems and methods that can address the challenges of a poor road transportation system.

WO2018026603 discloses systems and methods for determining an optimal lane trajectory and route for an autonomous vehicle under changing road conditions and for forecasting autonomous car performance along a route. A road's profile is analyzed to determine a safe lateral lane position. In ice or snow, a vehicle may follow ruts made by previous vehicles, even if following such ruts does not place a vehicle in a lane's center. In warmer weather, a vehicle may drive outside the ruts to avoid risks of aquaplaning. Dynamic road conditions and AV support along a route are used to maximize AV use and to forecast AV performance. A vehicle control system calculates sensor limitations and uses these sensor limitations when calculating which route to select.

WO2010/042957 discloses a sensor-based tire data collection device integrated with the body of a vehicle tire.

DE102016001997A1 discloses a method associated with a first vehicle and a second vehicle on a roadway for reducing degradation of the roadway, causing a driving path of the first vehicle to be staggered with respect to the driving path of the second vehicle by applying different offset displacements to the original driving paths of the first vehicle and the second vehicle.

### SUMMARY OF THE INVENTION

The invention is defined in the independent claims to which reference should now be made. Advantageous features are set forth in the dependent claims.

### BRIEF DESCRIPTION OF THE DRAWINGS

FIGs. 1A and 1B illustrate an example scenario of roadway degradation based on conventional driving.
FIGs. 1C and 1D illustrate an example scenario of reduced roadway degradation based on employing the disclosed technology.
FIG. 2 illustrates an example environment of operation of the disclosed technology.
FIG. 3 illustrates an example of a car fitted with multiple sensors.
FIGs. 4A and 4B illustrate various examples of offset displacements applicable to tire placement of vehicles.
FIG. 5 illustrates an example architecture of a vehicular computer according to some embodiments of the disclosed technology.
FIG. 6 illustrates an example architecture of a remote computer communicably coupled to a vehicular computer, according to some embodiments of the disclosed technology.
FIG. 7 illustrates steps of a flowchart associated with calculating an offset displacement applicable to tire placement, according to some embodiments of the disclosed technology.
FIG. 8 illustrates steps of a flowchart associated with a first vehicle modifying its driving path based on offset displacement applied by a second vehicle on the roadway, according to some embodiments of the disclosed technology.

### DETAILED DESCRIPTION

Embodiments of the present application are directed at systems and methods associated with intelligent vehicular computers that reduce roadway degradation and improve the lifetime of roadways. A driving path of a first vehicle is caused to be staggered with respect to the driving path of a second vehicle by applying different offset displacements to the original driving paths of the first vehicle and the second vehicle. The offset displacements applied by each vehicle can be calculated in real-time based on environmental variables and vehicular data collected from sensors associated with the first vehicle and the second vehicle.

In some examples as not being covered by the claims, the offset displacement for a vehicle is calculated with respect to at least one tire of the vehicle, and includes a distance and a direction. The offset displacement when applied to the vehicle causes the original path of the vehicle to be dynamically modified. As a result, applying the offset displacement for tire placement results in reduced degradation of the roadway. The offset displacement can be applied regardless of the presence of structural artifacts like potholes, bumps, dips, or ruts on the road. One advantage of the disclosed technology is that different offset displacements by different vehicles on the road causes the vehicle to be staggered with respect to one another, thereby allowing greater usage of the roadway. As a result, the wear and tear of the roadway (from a vehicle travelling on the roadway) gets spread out over a wider portion of the roadway. Further, because the vehicles are staggered with respect to one another, degradation from the conventional "middle of the road" driving is reduced, thereby increasing the lifetime of the roadway.

According to the invention, staggering of the vehicles is achieved based on inter-vehicular and intra-vehicular communications. Inter-vehicular communications involve electronic (typically wireless) communications with one or more nearby vehicles traveling on the road. Intra-vehicular communications include environmental parameters and vehicular data that can be collected by sensors coupled to the vehicle. Examples of environmental parameters can include an ambient temperature, an ambient pressure, an ambient humidity, a condition of the roadway, a wind speed, an amount of rainfall, an amount of snow, an amount of ambient light, or other suitable environmental parameter that can be collected by an electronic or mechanical sensor. Examples of vehicular data can include operational data associated with at least one tire (e.g., the tire closest to the structural artifact on the roadway) such as a speed of travel of the tire, an acceleration of the tire, a direction of travel of the tire, a vehicular weight on the tire, and a frictional force of the roadway impacting the tire. In some examples as not being covered by the claims, the offset displacement is also based on object data, e.g., one or more objects located on the portion of the roadway where the vehicle is moving. Examples of objects can include a pole, a traffic light, a boundary wall, a shoulder of the roadway, one or more other vehicles in proximity of the vehicle, a pedestrian, an animal, a tower, a tree, a building, a sidewalk, a partition on the roadway, a road barrier, a fence, a construction zone, lane markings, a traffic marking cones or barrel, a road divider, or any other object on the roadway that can be detected by sensors. Disclosed embodiments are applicable to any type of vehicle, including but not limited to self-driving cars. Various embodiments, advantages, and aspects of the disclosed technology will be apparent in the following discussions.

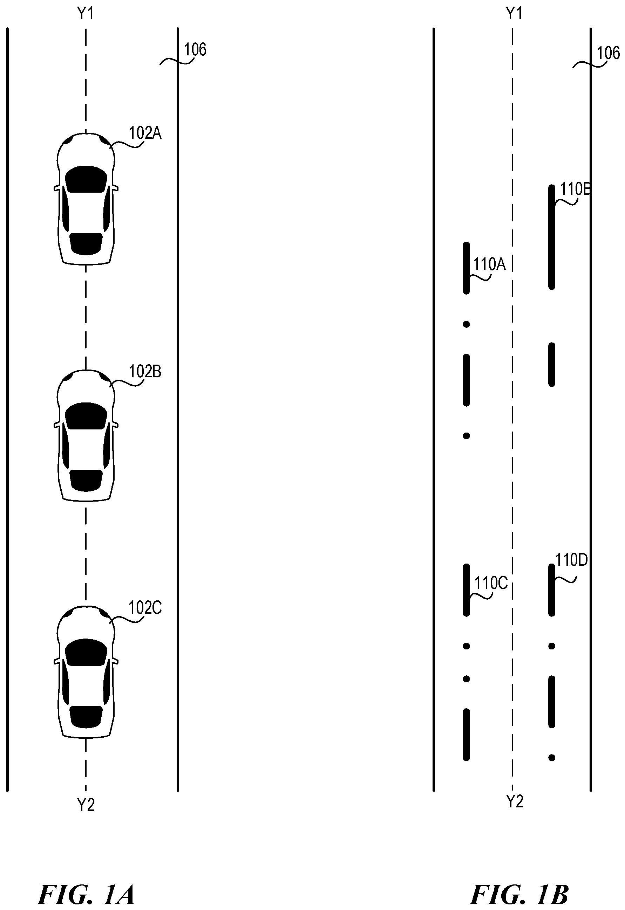

FIGs. 1A and 1B illustrate an example scenario of roadway degradation based on conventional driving. For example, FIG. 1A shows an original path Y1Y2 taken by vehicles 102A, 102B, 102C on roadway 106 based on conventional "middle of the road" driving. In other words, 102A, 102B, 102C are traveling along the same common straight line, e.g., following one another with little or no horizontal deviation with respect to one another. FIG. 1B shows the undesired effect of such driving practice. For example, FIG. 1B shows grooves, ruts, roadway deformities, or generally artifacts 110A, 110B, 110C, 110D formed from repeated "middle of the road" driving. The artifacts may not necessarily be the same. For example, certain sections of the roadway may be affected greater than other sections of the roadway. Further, the shape (e.g., size, shape, width, depth, etc.) of the deformities may be different.

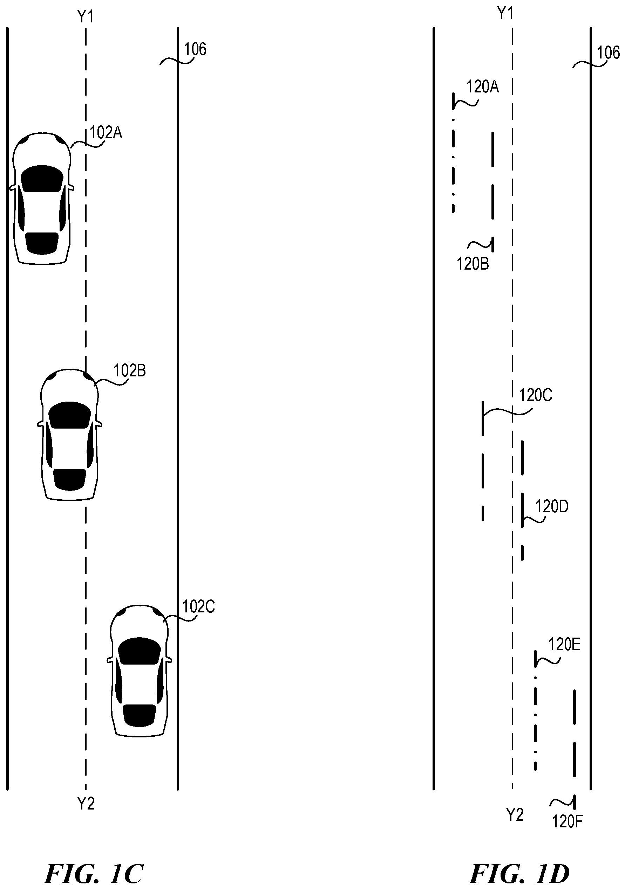

FIGs. 1C and 1D illustrate an example scenario of reduced roadway degradation based on employing the disclosed technology. For example, FIG. 1C shows vehicles 102A, 102B, 102C are travelling staggered or offset with respect to one another. As a result, the deformities on the roadway, shown as 120A, 120B, 120C, 120D, 120E, 120F in FIG. 1D, are less severe because the same section of the roadway is not taken by multiple vehicles, effectively spreading the wear and tear of roadway over a larger portion of the roadway, thereby reducing the degradation of the roadway. The offset displacement applied by a vehicle can be measured with a suitable axis/frame of reference associated with the vehicle (e.g., left tires or right tires) or the roadway. For example, offset displacement can be measured with respect to the axis Y1Y2 in the middle of the roadway.

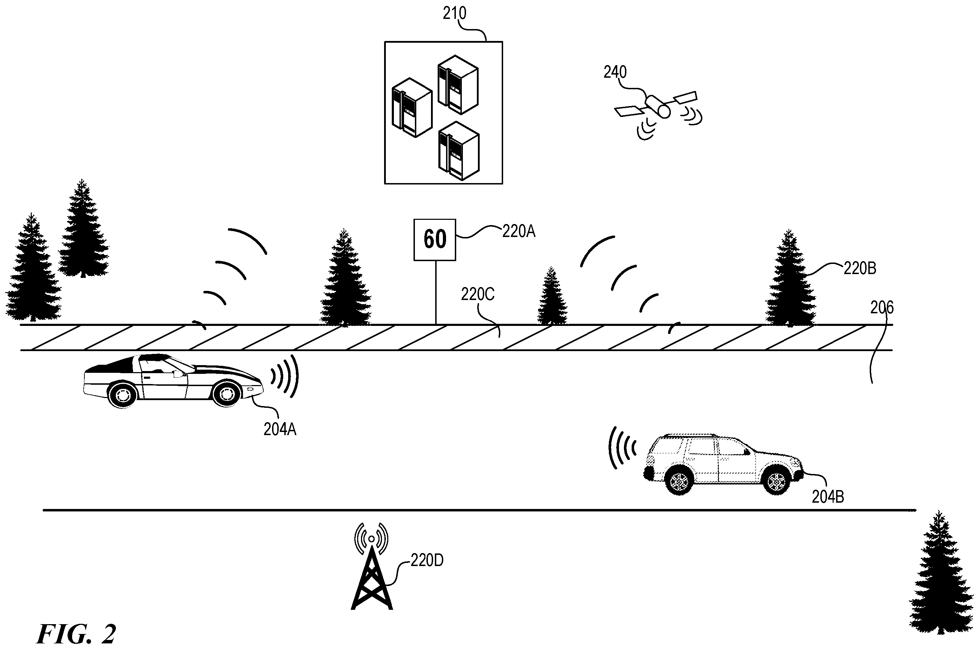

FIG. 2 illustrates an example scenario of operation of the disclosed technology. Cars 204A and 204B are traveling on a portion of roadway 206. However, the direction of travel of cars 204A and 204B are shown staggered with respect to one another, i.e., cars 204A, 204B do not travel along a common straight line.

According to disclosed embodiments, car 204A can modify its path by applying an offset displacement to its tire placement, thereby reducing degradation of roadway 206. Also, car 204B can apply another offset displacement to its tire placement. The offset displacement applied by cars 204A and 204B are different and thus result in cars driving in different portions of roadway 206. Thus, one benefit of the disclosed technology is greater usage of roadway 206 and reducing wear and tear from repetitive driving on a certain section of roadway 206.

Cars 204A and 204B can be equipped with multiple sensors such that allow them to communicate with one another. According to the invention, the offset displacement taken by car 204B is communicated to car 204A so that car 204A applies a different offset displacement than the offset displacement applied by car 204B. Further, cars 204A, 204B can also communicate with one or more remote servers 210 and/or satellite 240 via sensors coupled to cars 204A, 204B. Objects 220A, 220B, 220C, 220D are located/positioned on the portion of roadway 206. Object 220A is a speed limit sign. Object 220B is a tree. Object 220C is a shoulder of the portion of roadway 206. Object 220D is a communication tower. Communications between cars 204A, 204B or between remotes servers 210 and a vehicle (e.g., car 204A) can employ any suitable type of wireless technology, such as Bluetooth, Wifi, WiMax, cellular, single hop communication, multi-hop communication, Dedicated Short Range Communications (DSRC), or a proprietary communication protocol. Cars 204A, 204B can obtain their geographical positions on roadway 206 with the help of GPS information from satellite 240.

According to the invention, car 204B communicates information about its offset displacement to car 204A. In an example as not being covered by the claims, car 204B can communicate information about its offset displacement to server 210. Car 204A can also communicate its geographical location, e.g., obtained using data collected from sensors coupled to car 204B. In some examples as not being covered by the claims, server 210 can communicate information about the offset displacement of each vehicle to other vehicles on roadway 206. Thus, according to disclosed examples as not being covered by the claims, information about structural artifacts on a roadway can be determined by a car or vehicle itself, e.g., using sensors coupled to the car. Although FIG. 2 shows a scenario with two cars 204A, 204B, embodiments of the disclosed technology can be applicable in scenarios with any number or types of cars. Also, offset displacement of a car can be communicated to any number of vehicles on the roadway. In some examples as not being covered by the claims, the offset displacement applied by a vehicle is communicated by the vehicle to server 210 which then broadcasts the offset displacement to vehicles occupying a certain portion of the roadway and proximal to the vehicle. Thus, in some examples as not being covered by the claims, vehicles on the roadway receive periodic or intermittent updates from server 210 with information about offset displacements taken by other proximal vehicles on the roadway.

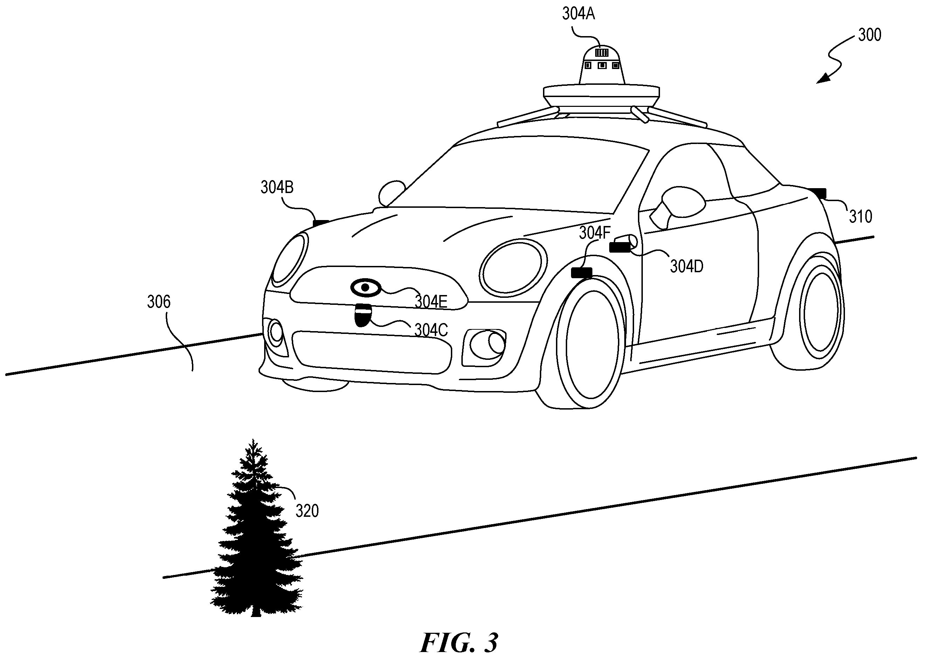

FIG. 3 illustrates an example of a vehicle (e.g., vehicle 300) fitted with multiple sensors traveling on roadway 306. For example, FIG. 3 shows vehicle 300 coupled with sensors 304A, 304B, 304C, 304D, 304E, 304F. Sensors 304A, 304B, 304C, 304D, 304E, 304F can be of the same or different types. There is no limitation on the number or the type of sensor(s) that can be coupled to a vehicle. For example, sensor 304A and 304E can be LIDAR units that spin continuously. Using laser beams emitted from a LIDAR unit, the LIDAR unit can generate a 360-degree image of the surroundings of vehicle 300. The image can be a map of one or more objects (e.g., object 320) within a suitable vicinity of vehicle 300. Sensors 304B, 304D, 304F can be radar units, which can measure distance between vehicle 300 and other objects or vehicles on roadway 306. In some embodiments, one or more camera units can be attached to the top of vehicle 300, e.g., adjacent to sensor 304A. Cameras can also help detect objects or vehicles on roadway 306, or in some scenarios, the edge, end of lane, or a shoulder of roadway 306. In some embodiments, any of sensors 304A, 304B, 304C, 304D, 304E, 304F can be a GPS unit capable of determining a current location of vehicle 300. In some embodiments, cameras can include multiple lenses of differing focal lengths - wide angle, standard and long distance - to view roadway 306. Further, cameras can be forward-facing and/or backward-facing. Also, blind-spot detection and lane-departure warning sub-systems included in the vehicular computer can use any of sensors 304A, 304B, 304C, 304D, 304E, 304F.

Data from one or more sensors are collected and analyzed at vehicular computer 310. For example, a map generated by the LIDAR unit(s), radar unit(s), and/or cameras can be integrated with information received from a GPS unit for vehicle 300 to determine "its bearings in the world in real time." Radar units transmit radio waves to an object and interpret the reflection back from the object under different weather and light conditions. In some embodiments, any of sensors 304A, 304B, 304C, 304D, 304E, 304F can detect the presence of structural artifacts or roadway deformities on a portion of roadway 306, based on monitoring the portion of roadway 306.

Although FIG. 3 shows vehicular computer 310 located in the rear (e.g., the trunk) of vehicle 300, in some embodiments, vehicular computer 310 can be located anywhere within vehicle 300. Further, vehicular computer 310 can be retrofitted (e.g., as an add-on) into older "legacy" vehicles, or coupled to and/or integrated with a newer vehicle having an existing vehicular computer. That is, one advantage of the present technology is that the architecture of vehicular computer 310 supports any type of vehicle, regardless of the age or the "technological level" of a vehicle.

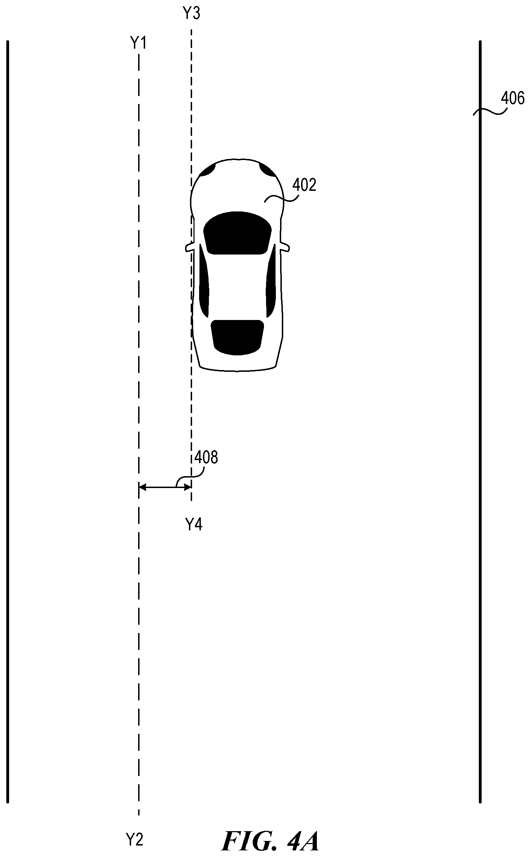

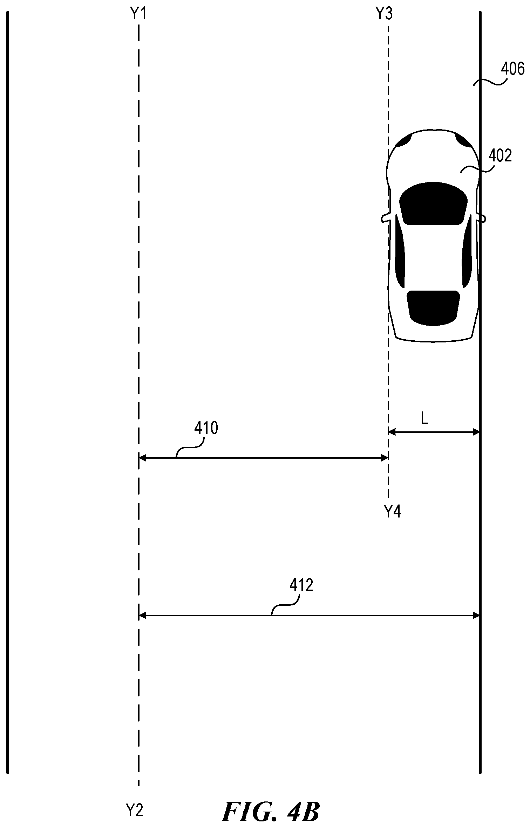

FIGs. 4A and 4B illustrate various examples of offset displacements applicable to tire placement of vehicles. For example, FIG. 4A demonstrates vehicle 402 traveling on roadway 406 along an original direction Y1Y2. Without applying an offset displacement, vehicle 402 would have traveled along the direction Y1Y2. By applying an offset displacement 408 with respect to its original path Y1Y2, the original path Y1Y2 of vehicle 402 gets modified to travel along new path Y3Y4, shown with respect to an axis passing through the left tires of vehicle 402.

FIG. 4B illustrates a scenario in which vehicle 402 applies an offset displacement (e.g., a maximum offset 410 with respect to its original path Y1Y2) to avoid hitting the side of the roadway 406. If the width of the car is L and the distance (with respect to original path Y1Y2) to the edge of roadway 406 is denoted as 412, then the maximum offset displacement 410 can be equated as distance 412 - L. As a result, vehicle 402 modifies its path from Y1Y2 to Y3Y4 in FIG. 4B, shown with respect to an axis passing through the left tires of vehicle 402. In some embodiments, if the offset displacement (e.g., measured by the vehicles with respect to the middle of the roadway) applied by vehicle 1 is D1, the other vehicles on the roadway are informed of D1, either directly by the vehicle, or indirectly by a server. Upon receiving information about vehicle 1 applying an offset D1, the other vehicles can apply offsets D1+X1, D1+X2, D1+X3, ... where X1, X2, X3 ... can be random numbers generated by the vehicular computers of the other vehicles on the roadway with the constraint that the offset calculated as Di+Xi does not exceed the width of the roadway. In some embodiments, X1, X2, X3 ... can be random numbers generated using different random distributions.

Thus, FIGs. 4A and 4B demonstrate that a value of offset displacement can lie lying between a minimum value (e.g., zero) and a maximum value (e.g., dependent on the width of the roadway or distance to other obstacles on the roadway).

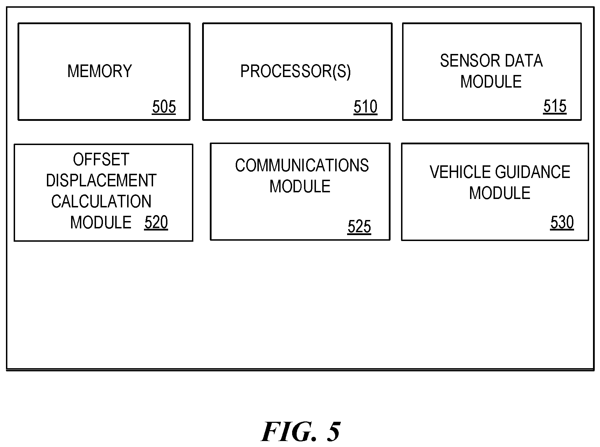

FIG. 5 illustrates an example architecture of a vehicular computer according to some embodiments of the disclosed technology. The vehicular computer (e.g., one or more data processors) is capable of executing algorithms, software routines, instructions, based on processing data provided by a variety of sources related to the control of the vehicle. The vehicular computer can be a factory-fitted system or an add-on unit retrofitted into a vehicle. Furthermore, the vehicular computer can be a general-purpose computer or a dedicated, special-purpose computer. No limitations are imposed on the location of the vehicular computer relative to the vehicle. According to the embodiments shown in FIG. 5, the disclosed system can include memory 505, one or more processors 510, sensor data module 515, offset displacement calculation module 520, communications module 525, and vehicle guidance module 530. Other embodiments of the present technology may include some, all, or none of these modules and components, along with other modules, applications, data, and/or components. Still yet, some embodiments may incorporate two or more of these modules and components into a single module and/or associate a portion of the functionality of one or more of these modules with a different module.

Memory 505 can store instructions for running one or more applications or modules on processor(s) 510. For example, memory 505 could be used in one or more embodiments to house all or some of the instructions needed to execute the functionality of sensor data module 515, offset displacement calculation module 520, communications module 525, and vehicle guidance module 530. Generally, memory 505 can include any device, mechanism, or populated data structure used for storing information. In accordance with some embodiments of the present disclosure, memory 505 can encompass, but is not limited to, any type of volatile memory, nonvolatile memory, and dynamic memory. For example, memory 505 can be random access memory, memory storage devices, optical memory devices, magnetic media, floppy disks, magnetic tapes, hard drives, SIMMs, SDRAM, DIMMs, RDRAM, DDR RAM, SODIMMS, EPROMs, EEPROMs, compact discs, DVDs, and/or the like. In accordance with some embodiments, memory 505 may include one or more disk drives, flash drives, one or more databases, one or more tables, one or more files, local cache memories, processor cache memories, relational databases, flat databases, and/or the like. In addition, those of ordinary skill in the art will appreciate many additional devices and techniques for storing information that can be used as memory 505.

Sensor data module 515 receives information from and transmits information to multiple sensors coupled to the vehicle. Examples of sensors can be video cameras, still cameras, LIDAR units, radar units, GPS units, speed sensors, acceleration sensors, environmental sensors such as temperature/weather sensors for sensing ambient weather, operational data associated with one or more vehicle parts such as a tire, radiation sensors for detecting chemicals in the air, or otherwise any suitable sensors coupled to the vehicle. Sensors can be attached anywhere in the vehicle, e.g., to the top, to the rear, on the sides, underneath, on or inside at least one tire of the vehicle, or any other suitable position inside or outside the vehicle. Also, sensors can be of different types and from different manufacturers or vendors. Data from sensors can be utilized to calculate relative distance data to one or more nearby objects/obstacles on the roadway. Examples of objects can be a pedestrian, other vehicles, a traffic light, a sidewalk, a shoulder of a road, a billboard, a speed post, a traffic sign, or otherwise any physical object that can be detected by sensors. In some embodiments, the vehicular computer can self-generate a map based on data communicated by sensor data module 515, showing locations of structural artifacts (e.g., ruts, potholes, etc.) and/or locations of objects (e.g., pedestrians, traffic lights, shoulder of roadway, etc.).

According to examples as not being covered by the claims, offset displacement calculation module 520 is configured to receive information from sensor data module 515 and/or external sources to calculate an offset displacement for tire placement relative to the current position of the vehicle. The received information can be based on one or more factors such as the location information of the structural artifacts/deformities on the roadway, the instantaneous position of objects located on the portion of the roadway, operational data associated with the at least one tire, and the environmental data external to the vehicle. The operational data can be (or, related to) a speed of travel of at least one tire, an acceleration of the at least one tire, a direction of travel of the at least one tire, a vehicular weight on the at least one tire, and a frictional force of the roadway impacting the at least one tire. In some embodiments, the offset displacement has a value and a direction, e.g., relative to a current position of the vehicle or relative to a detected structural artifact on the roadway.

Communications module 525 is associated with sending/receiving information (e.g., collected by sensor data module 515) with a remote server or with one or more nearby vehicles traveling on the road. These communications can employ any suitable type of technology, such as Bluetooth, Wifi, WiMax, cellular, single hop communication, multi-hop communication, Dedicated Short Range Communications (DSRC), or a proprietary communication protocol.

Vehicle guidance module 530 is associated with the functionality of driving the vehicle on the roadway, including modifying the path of the vehicle to generate a new position of the vehicle, based on information from sensor data module 515, offset displacement calculation module 520, and communications module 525. In some embodiments, vehicle guidance module 530 can predict an expected outcome of impact between the vehicle and a structural artifact; calculate a probability of the expected outcome of impact between the vehicle and a structural artifact and also determine that the probability is greater than a threshold value. In some embodiments, vehicle guidance module 530 can optionally calculate a metric indicative of savings from the reduced wear and tear of the roadway, based on applying the offset displacement to the current position of the vehicle. Vehicle guidance module 530 can employ one or more machine learning algorithms such as artificial intelligence, neural networks, Tensor Flow, or any other suitable methodology to generate a new position of the vehicle.

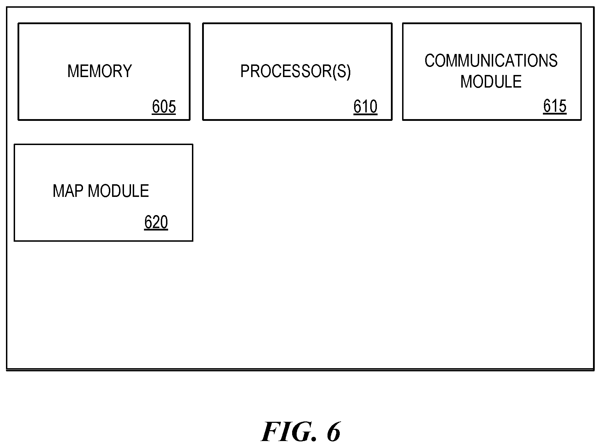

FIG. 6 illustrates an example architecture of a remote computer, according to some examples as not being covered by the claims. Referring to FIG. 6, an example internal architecture of a remote server (or, servers) is shown, according to some embodiments of the disclosed technology. According to the examples shown in FIG. 6, the disclosed system can include memory 605, one or more processors 610, communications module 615, and map module 620. Memory 605 and processor 610 are similar to memory 505 and processor 510 discussed in connection with FIG. 5.

Communications module 615 exchanges information (e.g., about objects or structural artifacts on a roadway) with geocoding databases such as GOOGLE, vehicular computers of vehicles moving on roadways, or other servers. In some examples, communications module 615 can use an application programing interface (API) to exchange information with various remotes servers.

Map module 620 can be configured to create a map of objects/obstacles/roadway deformities based on information received from communications module 615. In some embodiments, information received from communications module 615 can include information about traffic congestions. The map can be communicated to vehicles on the road by communications module 615.

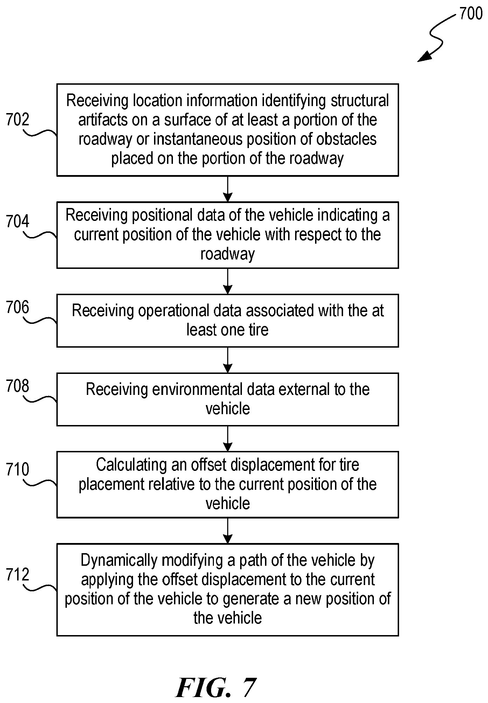

FIG. 7 illustrates steps of a flowchart associated with calculating an offset displacement applicable to tire placement, according to some examples as not being covered by the claims. Starting at step 702, the vehicular computer receives (e.g., from one or more sensors coupled to the vehicle or a remote server) location information identifying structural artifacts (such as ruts, potholes, bumps, dips, etc.) on a surface of a portion of the roadway and/or instantaneous position of objects located on the portion of the roadway. At step 704, the vehicular computer receives (e.g., from one or more sensors coupled to the vehicle or a remote server) positional data of the vehicle indicating a current position of the vehicle with respect to the roadway. At step 706, operational data associated with at least one tire of the vehicle is received (e.g., from a sensor coupled to the vehicle) by the vehicular computer. The operational data can be measured along radial, tangential, and lateral directions with respect to a circumference of the at least one tire. Examples of operational data can include slip ratio, brake pressure or braking torque, engine torque, wheel torque, steering wheel angle, and the like. External environmental data is received (at step 708) from a temperature sensor coupled to the vehicle. Examples of sensors can be video cameras, still cameras, LIDAR units, radar units, GPS units, speed sensors, acceleration sensors, environmental sensors such as temperature/weather sensors for sensing ambient weather, operational data associated with one or more vehicle parts such as a tire, infrared, or thermal cameras, radiation sensors for detecting chemicals in the air, or otherwise any suitable sensors coupled to the vehicle. Sensors can be attached anywhere in the vehicle, e.g., to the top, to the rear, on the sides, underneath, on or inside at least one tire of the vehicle, or any other suitable position inside or outside the vehicle. Also, sensors can be of different types and from different manufacturers or vendors. In some embodiments, the disclosed vehicular computer can self-generate a map based on data communicated by showing locations of structural artifacts (e.g., ruts, potholes, etc.) and/or locations of objects (e.g., pedestrians, traffic lights, shoulder of roadway, etc.). In some embodiments, the positional data of the vehicle indicating a current position of the vehicle is obtained based on a comparison of (i) the operational data associated with the at least one tire with (ii) factory-determined parameters corresponding to the at least one tire specified under conditions of the external environmental data (collected by sensors coupled to the vehicle). Factory-determined parameters may be locally stored data provided by a manufacturer, a mechanic, a user, an owner, and/or other entity having specifications and/or measurements for the physical dimensions of the vehicle and corresponding to a given set of environmental data.

At step 710, the vehicular computer calculates an offset displacement for the vehicle's tire placement, based on any combination of the following data: the location information of the structural artifacts, the instantaneous position of objects located on the portion of the roadway, the operational data associated with the at least one tire, or the environmental data. The offset displacement can correspond to a safe driving action that can be applicable over a short future time horizon (of the order of fractions of seconds) or longer (2-5 seconds to tens of seconds, minutes, or many minutes).

In some embodiments, the offset displacement lies in an interval having a minimum value of offset displacement and a maximum value of offset displacement. At step 712, the vehicular computer modifies the path of the vehicle based on the calculated offset displacement that results in preventing, or otherwise reducing roadway degradation. Applying different offset displacements by different vehicles causes the vehicles to be staggered with respect to one another, i.e., the vehicles do not travel along a common straight line, thereby allowing greater usage of the roadway. As a result, the wear and tear of the roadway (from a vehicle travelling on the roadway) gets spread out over a wider portion of the roadway. As an illustrative example, if the offset displacement applied by a vehicle corresponds to its tire width, this can result in increased usage of the roadway and significantly reducing repair and replacement costs, in comparison to conventional driving scenarios when no offset displacements are applied by vehicles traveling on a roadway.

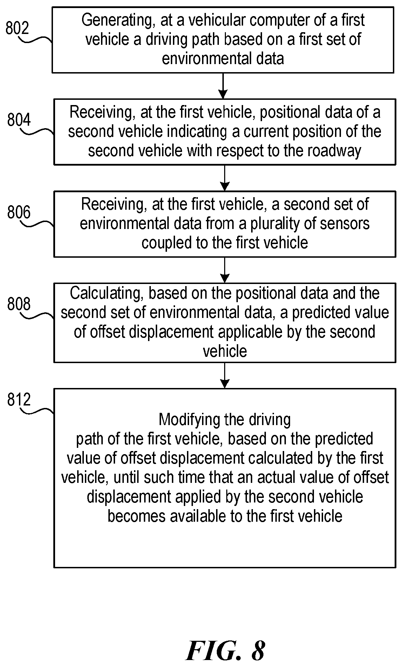

FIG. 8 illustrates steps of a flowchart associated with a first vehicle modifying its driving path based on offset displacement applied by a second vehicle on the roadway, according to the invention. The flowchart in FIG. 8 illustrates a scenario when offset displacement applied by a second vehicle causes the first vehicle to modify its driving path, when both the first and the second vehicles are moving on the roadway. Such a scenario can arise when the second vehicle is unable to communicate its offset displacement to the first vehicle, due to temporary communication failures when the vehicles are out-of-range or other reasons. In such a scenario, the first vehicle calculates a predicted value of offset displacement that may be applicable to the second vehicle, and decides to modify its driving path accordingly. The two vehicles can be in the same lane or, in different lanes. Further, the two vehicles may be headed along the same direction or they may be headed in different directions. At step 802, a vehicular computer in a first vehicle generates a driving path of the first vehicle based on a first set of environmental data. For example, the driving path may be based on weather, a current location of the first vehicle, the destination of the first vehicle, real-time traffic data in a geographical area around the current location of the first vehicle, etc. Based on the generated driving path, the first vehicle travels on a roadway shared by a second vehicle. At some location along the roadway, the second vehicle sends (step 804) its positional data (in real time or near real time) to the first vehicle. The positional data can be based on DSRC or other suitable wireless communication protocols. The first vehicle can also receive (step 806) a second set of environmental parameters from a plurality of sensors coupled to the first vehicle. Examples of sensors can be video cameras, still cameras, LIDAR units, radar units, GPS units, speed sensors, acceleration sensors, environmental sensors such as temperature/weather sensors for sensing ambient weather, operational data associated with one or more vehicle parts such as a tire, infrared, or thermal cameras, radiation sensors for detecting chemicals in the air, or otherwise any suitable sensors coupled to the vehicle. Sensors can be attached anywhere in the vehicle, e.g., to the top, to the rear, on the sides, underneath, on or inside at least one tire of the vehicle, or any other suitable position inside or outside the vehicle. Also, sensors can be of different types and from different manufacturers or vendors. At step 808, the first vehicle calculates a predicted value of offset displacement that can be applicable by the second vehicle to spread wear and tear over a larger portion of the roadway. The predicted value of the offset displacement applicable by the second vehicle can be based on the positional data from the first vehicle and/or the second set of environmental data. One scenario where the first vehicle calculates the predicted value of the offset displacement applicable by the second vehicle is when a temporary communication failure happens between the first vehicle and the second vehicle. As a result, the first vehicle may be unaware of the actual value of the offset displacement of the second vehicle, and hence estimates the actual value using the predicted value. Based on the predicted value of offset displacement calculated by the first vehicle, the vehicular computer at the first vehicle modifies (step 812) the driving path of the first vehicle, until such time that the actual value of offset displacement of the second vehicle becomes available to the first vehicle, e.g., the communication link comes back up.

The foregoing description of embodiments has been presented for purposes of illustration and description. The foregoing description is not intended to be exhaustive or to limit embodiments of the present invention to the precise form disclosed, and modifications and variations are possible in light of the above teachings or may be acquired from practice of various embodiments.

## Claims

1. A computer-implemented method associated with a first vehicle (300) and a second vehicle on a roadway for reducing degradation of the roadway, causing a driving path of a first vehicle to be staggered with respect to the driving path of a second vehicle by applying different offset displacements to the original driving paths of the first vehicle and the second vehicle, comprising:
generating (802), at a vehicular computer (510) of the first vehicle (300), a driving path of the first vehicle (300) on the roadway based on a first set of environmental data;
receiving (804), at the first vehicle (300), from the second vehicle via a wireless communication, positional data indicating an offset displacement of the second vehicle;
calculating, by the vehicular computer (510) of the first vehicle (300), an offset displacement different from the offset displacement of the second vehicle, wherein the offset displacement and the second offset displacement are both measured with respect to a frame of reference associated with the roadway;
applying, by the first vehicle (300), the different offset displacement;
receiving (806), at the first vehicle (300), a second set of environmental data from a plurality of sensors coupled to the first vehicle;
determining, at the first vehicle (300), that the wireless communication has failed;
calculating (808), by the vehicular computer (510) of the first vehicle (300), a predicted value of offset displacement applicable by the second vehicle based on the received positional data and the second set of environmental data; and
modifying (812), at the first vehicle (300), based on the predicted value of offset displacement calculated by the first vehicle, the driving path of the first vehicle (300), until such time that the actual value of offset displacement of the second vehicle becomes available to the first vehicle.

2. The method of claim 1, wherein the first and second set of environmental data include at least one of: an ambient temperature, an ambient pressure, an ambient humidity, a condition of the roadway, a wind speed, an amount of rainfall, an amount of snow, and an amount of ambient light.

3. The method of claims 1 or 2, wherein the offset displacements lie in an interval having a minimum value of offset displacement and a maximum value of offset displacement.

4. A non-transitory machine-readable storage medium having stored thereon instructions which, when executed by a processor included in a vehicle, cause the processor to perform the steps of any of method claims 1 to 3.

5. A vehicular computer comprising and a memory and a processor coupled to the memory, wherein the processor is configured to perform the steps of any of method claims 1 to 3.

## Patentansprüche

1. Computerimplementiertes Verfahren, das mit einem ersten Fahrzeug (300) und einem zweiten Fahrzeug auf einer Fahrbahn verbunden ist, zum Verringern der Abnutzung der Fahrbahn, indem verursacht wird, eine Fahrspur eines ersten Fahrzeugs gegenüber der Fahrspur eines zweiten Fahrzeugs zu versetzen, wobei unterschiedliche Versatzverschiebungen auf die ursprünglichen Fahrspuren des ersten Fahrzeugs und des zweiten Fahrzeugs angewendet werden, umfassend:
Erzeugen (802), an einem Fahrzeugcomputer (510) des ersten Fahrzeugs (300), einer Fahrspur des ersten Fahrzeugs (300) auf der Fahrbahn auf Basis eines ersten Umgebungsdatensatzes;
Empfangen (804), an dem ersten Fahrzeug (300), von einer Versatzverschiebung des zweiten Fahrzeugs angebenden Positionsdaten von dem zweiten Fahrzeug über drahtlose Kommunikation;
Berechnen, durch den Fahrzeugcomputer (510) des ersten Fahrzeugs (300), einer Versatzverschiebung, die von der Versatzverschiebung des zweiten Fahrzeugs verschieden ist, wobei die Versatzverschiebung und die zweite Versatzverschiebung beide in Bezug auf ein mit der Fahrbahn verbundenes Bezugssystem gemessen werden;
Anwenden, durch das erste Fahrzeug (300), der verschiedenen Versatzverschiebung;
Empfangen (806), an dem ersten Fahrzeug (300), eines zweiten Umgebungsdatensatzes von einer Mehrzahl von Sensoren, die mit dem ersten Fahrzeug gekoppelt sind;
Bestimmen, an dem ersten Fahrzeug (300), dass die drahtlose Kommunikation versagt hat;
Berechnen (808), durch den Fahrzeugcomputer (510) des ersten Fahrzeugs (300), eines vorhergesagten Versatzverschiebungswerts, der durch das zweite Fahrzeug anwendbar ist, auf Basis der empfangenen Positionsdaten und des zweiten Umgebungsdatensatzes; und
Modifizieren (812), an dem ersten Fahrzeug (300), der Fahrspur des ersten Fahrzeugs (300) auf Basis des durch das erste Fahrzeug berechneten vorhergesagten Versatzverschiebungswerts, bis der Istwert der Versatzverschiebung des zweiten Fahrzeugs für das erste Fahrzeug verfügbar wird.

2. Verfahren nach Anspruch 1, wobei der erste und der zweite Umgebungsdatensatz mindestens eines der Folgenden beinhaltet: eine Umgebungstemperatur, einen Umgebungsdruck, eine Umgebungsluftfeuchtigkeit, eine Bedingung der Fahrbahn, eine Windgeschwindigkeit, eine Regenmenge, eine Schneemenge und eine Umgebungslichtmenge.

3. Verfahren nach Anspruch 1 oder 2, wobei die Versatzverschiebungen in einem Intervall liegen, das einen Versatzverschiebungsmindestwert und einen Versatzverschiebungshöchstwert aufweist.

4. Nichtflüchtiges maschinenlesbares Speichermedium mit darauf gespeicherten Anweisungen, die bei Ausführung durch einen in einem Fahrzeug enthaltenen Prozessor den Prozessor zum Durchführen von einem der Verfahrensansprüche 1 bis 3 veranlassen.

5. Fahrzeugcomputer, umfassend einen Speicher und einen mit dem Speicher gekoppelten Prozessor, wobei der Prozessor zum Durchführen der Schritte von einem der Verfahrensansprüche 1 bis 3 konfiguriert ist.

## Revendications

1. Procédé mis en œuvre par ordinateur associé à un premier véhicule (300) et à un deuxième véhicule sur une chaussée pour réduire la dégradation de la chaussée, faisant qu'un parcours de conduite d'un premier véhicule soit décalé par rapport au parcours de conduite d'un deuxième véhicule en appliquant différents déplacements décalés aux parcours de conduite originaux du premier véhicule et du deuxième véhicule, comprenant :
générer (802), à un ordinateur de véhicule (510) du premier véhicule (300), un parcours de conduite du premier véhicule (300) sur la chaussée sur la base d'un premier ensemble de données environnementales ;
recevoir (804), au premier véhicule (300), du deuxième véhicule par communication sans fil, des données de position d'un déplacement décalé du deuxième véhicule ;
calculer, par l'ordinateur de véhicule (510) du premier véhicule (300), un déplacement décalé différent du déplacement décalé du deuxième véhicule, dans lequel le déplacement décalé et le deuxième déplacement décalé sont tous les deux mesurés par rapport à un cadre de référence associé à la chaussée ;
appliquer, par le premier véhicule (300), le déplacement décalé différent ;
recevoir (806), au premier véhicule (300), un deuxième ensemble de données environnementales d'une pluralité de capteurs couplés au premier véhicule ;
déterminer, au premier véhicule (300), que la communication sans fil a échoué ;
calculer (808), par l'ordinateur de véhicule (510) du premier véhicule (300), une valeur prédite de déplacement décalé applicable par le deuxième véhicule sur la base des données de position reçues et du deuxième ensemble de données environnementales ; et
modifier (812), au premier véhicule (300), sur la base de la valeur prédite de déplacement décalé calculée par le premier véhicule, le parcours de conduite du premier véhicule (300), jusqu'à ce que la valeur réelle du déplacement décalé du deuxième véhicule soit disponible au premier véhicule.

2. Procédé selon la revendication 1, dans lequel le premier et le deuxième ensemble de données environnementales comprennent au moins l'une d'entre : une température ambiante, une pression ambiante, une humidité ambiante, une condition de la chaussée, une vitesse du vent, une quantité de pluie, une quantité de neige et une quantité de lumière ambiante.

3. Procédé selon les revendications 1 ou 2, dans lequel le déplacement décalé se trouve dans un intervalle ayant une valeur minimale de déplacement décalé et une valeur maximale de déplacement décalé.

4. Support de stockage non transitoire lisible par machine ayant des instructions stockées dessus qui, lorsque exécutées par un processeur inclus dans un véhicule, font que le processeur met en œuvre les étapes de l'une quelconque des revendications 1 à 3 du procédé.

5. Ordinateur de véhicule comprenant une mémoire et un processeur couplé à la mémoire, dans lequel le processeur est configuré pour mettre en œuvre les étapes de l'une quelconque des revendications 1 à 3 du procédé.
